(19) Europäisches Patentamt / European Patent Office / Office européen des brevets

(11) **EP 3 448 676 B1**

(12) **EUROPÄISCHE PATENTSCHRIFT**

(45) Veröffentlichungstag und Bekanntmachung des Hinweises auf die Patenterteilung:
**16.03.2022 Patentblatt 2022/11**

(21) Anmeldenummer: **17721099.4**

(22) Anmeldetag: **27.04.2017**

(51) Internationale Patentklassifikation (IPC):
**B32B 27/08** (2006.01)   **B29D 29/00** (2006.01)
**B32B 27/40** (2006.01)   **F16G 1/00** (2006.01)

(52) Gemeinsame Patentklassifikation (CPC):
**B32B 27/40; B29D 29/00; B32B 27/08**

(86) Internationale Anmeldenummer:
**PCT/EP2017/060090**

(87) Internationale Veröffentlichungsnummer:
**WO 2017/186862 (02.11.2017 Gazette 2017/44)**

(54) **ELASTOMER-SANDWICHSYSTEME UND METALLVERBUNDELEMENTE**

ELASTOMER SANDWICH SYSTEMS AND METAL COMPOSITE ELEMENTS

SYSTEME SANDWICH ELASTOMERE ET ELEMENTS COMPOSITES EN METAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2016 EP 16305495**

(43) Veröffentlichungstag der Anmeldung:
**06.03.2019 Patentblatt 2019/10**

(73) Patentinhaber: **Covestro Deutschland AG**
**51373 Leverkusen (DE)**

(72) Erfinder:
• **STUMPF, Andreas**
**PO Box 28605,**
**Dubai Investment Park 2,**
**Plot Number 597, 1052**
**Dubai (AE)**
• **HÄTTIG, Jürgen**
**51519 Odenthal (DE)**
• **GOJSIC, Slaven**
**10.000 Zagreb (HR)**
• **ALVAREZ, Antonio**
**26600 Chantemerle les Bles (FR)**

(74) Vertreter: **Levpat**
**c/o Covestro AG**
**Gebäude 4825**
**51365 Leverkusen (DE)**

(56) Entgegenhaltungen:
**EP-A2- 0 280 175**

**Beschreibung**

Die Erfindung betrifft Elastomer-Sandwichsysteme enthaltend mindestens zwei Komponenten, wobei eine Komponente (i) ein thermoplastisches Polyurethan ist und daran flächig haftend die zweite Komponente (ii) ein massives Gießpolyurethan mit einer Dichte von 800 bis 1800 kg/m$^3$ ist, wobei mindestens eine Komponente des Elastomer-Sandwichsystems einen Weiterreißwiderstand nach ISO 34-1 von 30 kN/m bis 85 kN/m und einen Abriebverlust nach ISO 4649 von 50 mm$^3$ bis 5 mm$^3$ aufweist und zusätzlich mindestens beide Komponenten eine Rückprallelastizität nach DIN 53512 von 35 % - 70 % aufweisen und ein Verfahren zu deren Herstellung. Die eine Komponente (i) fungiert dabei als weiterreißfeste Deckschicht, während die zweite Komponente (ii) als energieabsorbierende Trägerschicht fungiert. Weiterhin betrifft die Erfindung Metallverbundelemente enthaltend Elastomer-Sandwichsysteme, ein Verfahren zu deren Herstellung und ihre Verwendung als Verkleidungselemente im Transportbereich, Bergbau- und Minenbereich, insbesondere in Fülltrichtern und Transportbändern.

Verbundelemente auf der Basis von Metallen und Gummi, im allgemeinen Sprachgebrauch auch als "Metall-Gummi-Verbunde" bezeichnet, sind allgemein bekannt. Sie finden breite Verwendung beispielsweise im Bergbaubereich in diversen Anwendungen wie z. B. Fülltrichter oder Transportbänder.

US-B1 9,126,762 beschreibt den Einsatz von Gummi in diesen Anwendungen als Deck- und Schutzschicht für den Metallträger. Die Vorteile des Gummis liegen in der exzellenten Weiterreißfestigkeit. Nachteile des Gummis bestehen in der kostenintensiven Herstellung, der geringen Rückprallelastizität <30 % und dem hohen Abrieb von > 80 mm$^3$, was die Lebensdauer in den entsprechenden Anwendungen verkürzt und aus wirtschaftlichen Gründen nicht wünschenswert ist.

In EP-A2 1 013 416 werden Verbundelemente enthaltend thermoplastische Polyurethane und mikrozellige Polyurethanelastomere mit einer Dichte zwischen 300 bis 700 kg/m$^3$, einer Zugfestigkeit nach DIN 53571 von 3 bis 8 N/mm$^2$, einer Bruchdehnung nach DIN 53571 von 350 bis 550 %, einem Weiterreißwiderstand von nach DIN 53515 von 8 bis 30 N/mm und einer Rückprallelastizität nach DIN 53512 von 50 bis 60 % als Dämpfungselemente im Fahrzeugbau beschrieben. Nachteilig an den mikrozelligen Schichten und dem daraus resultierenden Verbundsystem ist allerdings die geringe Energieaufnahme, die - bei dem Anforderungsprofil im Bergbau - signifikant größere erforderliche Schichtdicke, die sich nachteilig auf die Durchsätze bestehender Trichtergeometrien auswirken würde und das im Vergleich zu massiven Polyurethanelastomeren mit einer Dichte > 800 kg/m$^3$ geringe mechanische Eigenschaftsniveau, das eine Eignung im Bergbau weitestgehend ausschließt.

Ebenfalls bekannt sind Verbundelemente aus Verstärkungsgewebe und Polyurethan Gießelastomeren mit einer zusätzlichen Schicht aus thermoplastischem Polyurethan von bis zu 1 mm Wandstärke zwischen beiden Schichten wie in EP-A2 0 280 175 beschrieben. Die Schicht aus thermoplastischen Polyurethan fungiert neben der Tränkung des Verstärkungsgewebes als schockabsorbierende Schicht. Diese Verbundelemente werden zur Herstellung sogenannter horizontal verlaufender endless belts verwendet. Angaben zur Mechanik werden nicht gemacht.

EP 0 280 175 A2 offenbart ein Endlosband, bei dem eine Gewebeschicht auf einer schockabsorbierenden Schicht aufgebracht ist, auf die wiederum eine Schicht aus einem Gießelastomeren aufgebracht ist. Die schockabsorbierende Schicht gemäß dieser Schrift liegt somit zwischen zwei weiteren Schichten, ist aber nicht als Deckschicht ausgebildet.

Als Gummiersatz werden deshalb in diversen Anwendungen im Bergbau Gießelastomere auf Basis von Gießpolyurethanen (CPU) eingesetzt, die kostengünstig herstellbar sind und die die oben genannten Nachteile des Gummis wie hoher Abrieb und geringe Rückprallelastizität nicht aufweisen. Mit CPU werden Abriebwerte < 30 mm$^3$ erzielt. Die Rückprallelastizität liegt bei > 50 %. Nachteilig an Gießpolyurethanen ist jedoch die im Vergleich zum Gummi geringere Weiterreißfestigkeit. Während mit Hochleistungsgummi Werte von > 60 N/mm erreicht werden, liegt das Niveau bei Gießpolyurethan je nach Shore A Härte im Bereich 25 bis 40 N/mm.

Die Aufgabe der vorliegenden Erfindung beinhaltet deshalb die Entwicklung eines Materialkonzeptes, das die oben genannten Nachteile überwindet.

Diese Aufgabe konnte überraschenderweise durch die Entwicklung von Elastomer-Sandwichsystemen gelöst werden,

enthaltend mindestens zwei Komponenten, wobei eine Komponente

(i) ein thermoplastisches Polyurethan ist, das als Deckschicht fungiert, und daran flächig haftend die zweite Komponente

(ii) ein massives Gießpolyurethan mit einer Dichte von 800 bis 1800 kg/m$^3$ ist, das als Trägerschicht fungiert,

dadurch gekennzeichnet, dass die mindestens eine Deckschicht-Komponente des Elastomer-Sandwichsystems einen Weiterreißwiderstand nach ISO 34-1 von 30 kN/m bis 85 kN/m und einen Abriebverlust nach ISO 4649 von 50 mm$^3$ bis 5 mm$^3$ aufweist und zusätzlich mindestens beide Komponenten eine Rückprallelastizität nach DIN 53512 von 35 % - 70 % aufweisen.

In einer Ausführungsform der Erfindung kann das Elastomer-Sandwichsystem ein Schichtverbund sein, bei dem mindestens eine thermoplastische Polyurethanschicht mit mindestens einer massiven Gießpolyurethanschicht verbunden ist. Dabei können die erfindungsgemäßen Elastomer-Sandwichsysteme aus einer thermoplastischen Polyurethan (TPU) Deckschicht und aus einer Trägerschicht aus einem Gießpolyurethan (CPU) bestehen. Das Anforderungsprofil an die Deckschicht wie exzellente Weiterreißfestigkeit und Rückprallelastizität sowie ein geringer Abrieb und das Anforderungsprofil an die CPU Trägerschicht wie hohe Energieaufnahme (als Schockabsorber - Material wird nicht durchschlagen) und hohe Rückprallelastizität (spitzer Gegenstand wird beispielsweise zurückgefedert) werden mit diesem Materialkonzept erfüllt.

Aufgrund des unterschiedlichen Anforderungsprofils für beide Schichten werden TPU und CPU mit unterschiedlicher Shore A Härte verwendet. Für das TPU werden Shore A Härten von mindestens 75 bis 95 Shore A bevorzugt, insbesondere solche von 80 bis 90 Shore A, ganz besonders 82 bis 87 Shore A. Die Shore A Härte der CPU Schicht liegt im Bereich von 50 bis 85 Shore A, bevorzugt zwischen 55 und 75 Shore A und besonders bevorzugt im Bereich von 60 - 70 Shore A.

Außerdem weist die TPU Schicht einen Weiterreißwiderstand nach ISO 34-1 von 30 kN/m bis 85 kN/m, bevorzugt von 50 kN/m bis 75 kN/m, besonders bevorzugt von 60 kN/m bis 70 kN/m auf.

Des Weiteren zeigt die TPU Schicht einen Abriebverlust nach ISO 4649 von 50 mm$^3$ bis 5 mm$^3$, bevorzugt von 45 mm$^3$ bis 7 mm$^3$, besonders bevorzugt von 35 mm$^3$ bis 10 mm$^3$.

Weiterhin weist die TPU Schicht eine Rückprallelastizität auf, die der des CPU entspricht oder aber zumindest sehr ähnlich ist.

Die Wandstärke der TPU Schicht beträgt in der Regel zwischen 1,5 und 25 mm., bevorzugt 2 und 15 mm, besonders bevorzugt 2-10 mm

Entsprechend einer Ausführungsform der Erfindung kann es sich um einen thermoplastisches Polyurethan (i) - massives Gießpolyurethan (ii)-Schichtverbund, einen thermoplastisches Polyurethan (i) - massives Gießpolyurethan (ii) - thermoplastisches Polyurethan (i) Schichtverbund oder einen thermoplastisches Polyurethan (i)- massives Gießpolyurethan (ii)-thermoplastisches Polyurethan (i)- massives Gießpolyurethan (ii) Schichtverbund, bevorzugt thermoplastisches Polyurethan (i) - massives Gießpolyurethan (ii) Schichtverbund handeln.

Die Elastomer-Sandwichsysteme können wie auf verschiedene Weisen hergestellt werden.

Ebenfalls Gegenstand der Erfindung ist daher ein Verfahren zur Herstellung von Elastomer-Sandwichsystemen wobei diese durch

a) Herstellung von thermoplastischem Polyurethan (i) und
b) nachfolgendes Anfügen von massivem Gießpolyurethan (ii)

hergestellt werden.

In einem ersten Schritt wird die thermoplastische Polyurethanschicht (TPU) hergestellt. Im zweiten Schritt wird das massive Gießpolyurethan (CPU) hergestellt.

Dabei kann die Herstellung von massivem Gießpolyurethan (ii) in Gegenwart von thermoplastischem Polyurethan (i) erfolgen. Das Gießpolyurethan (ii) befindet sich dabei vorteilhafterweise in flächigem Kontakt zu (i).

Eine weitere Ausführungsform kann im Verbinden von thermoplastischem Polyurethan (i) mit vorgefertigtem massivem Gießpolyurethan (ii) bestehen.

Unter Verbinden im Sinne der Erfindung wird ein flächiges Zusammenfügen verstanden, wobei dieses über Schmelzkleben, Lösungsmittelklebung und/oder Reaktivkleben erreicht wird. Dabei können auch zusätzliche Klebstoffe eingesetzt werden. Weiterhin kann ein flächiges Zusammenfügen durch mechanische Mittel erreicht werden, wie z.B. durch Nahtmaterial, Nieten, Tacker oder ähnliches.

Die Haftung gemessen in Form der Reißfestigkeit zwischen den mindestens zwei Komponenten sollte dabei mindestens 0,5 bis 3,0 N/mm$^2$ betragen, bevorzugt 0,8 bis 3,0 N/mm$^2$, besonders bevorzugt 1,5 bis 3,0 N/mm$^2$.

TPU und CPU bestehen zumeist aus linearen Polyolen (Makrodiolen), wie Polyester-, Polyether- oder Polycarbonatdiolen, organischen Diisocyanaten und kurzkettigen, zumeist funktionellen Alkoholen (Kettenverlängerern). Die Umsetzung der Ausgangskomponenten kann nach bekannten Verfahren wie z. B. dem one-shot-Verfahren oder dem Prepolymerverfahren erfolgen.

Die eingesetzten thermoplastischen Polyurethane (TPU) und Gießpolyurethane (CPU) sind Reaktionsprodukte aus

I) organischen Diisocyanaten

II) Polyolen

III) Kettenverlängerern.

Als organische Diisocyanate (I) können aromatische, aliphatische, heterocyclische und cycloaliphatische Diisocyanate oder Gemische dieser Diisocyanate verwendet werden (vgl. HOUBEN-WEYL"Methoden der organischen Chemie", Band E20 "Makromolekulare Stoffe", Georg Thieme Verlag, Stuttgart, New York 1987, S. 1587-1593 oder Justus Liebigs Annalen der Chemie, 562, Seiten 75 bis 136).

Im Einzelnen seien beispielhaft genannt: aliphatische Diisocyanate, wie Hexamethylen diisocyanat, cycloaliphatische Diisocyanate, wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiisocyanatgehalt von >96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder Polyphenylpolymethylenpolyisocyanaten.

Als Polyole (II) können Polyether-Diole, Polyester-Diole, Polycaprolactone-Diole sowie Mischungen der jeweiligen Diole verwendet werden; neben Diolen können auch PolyetherPolyole, Polyester-Polyole, Polycaprolactone-Polyole mit einer Funktionalität > 2 sowie Mischungen der jeweiligen Polyole verwendet werden.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyldiethanolamine, beispielsweise N-Methyldiethanolamin und Glycole wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch tri-funktionelle Polyether in Anteilen von 0 bis 30 Gew.-% bezogen auf die bi-funktionellen Polyether eingesetzt werden, jedoch höchstens in solcher Menge, dass im Falle von TPU ein noch thermoplastisch verarbeitbares Produkt entsteht. Die im Wesentlichen linearen Polyether-Diole besitzen vorzugsweise zahlenmittlere Molekulargewichte n von 500 bis 10000 g/mol, besonders bevorzugt 500 bis 6000 g/mol. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z.B. Ethylenglykol, Diethylenglykol, 1,4-Butandiol, 1,5-Pentandiol, 1,6 Hexandiol, 1,10-Decandiol, 2,2-Dimethyl-1,3-propandiol, 1,3-Propandiol oder Di-propylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren wie Hydroxycapronsäure oder Polymerisationsprodukte von Lactonen, z.B. gegebenenfalls substituierten Caprolactonen. Als Polyester-Diole vorzugsweise verwendet werden Ethandiolpolyadipate, 1,4-Butandiolpolyadipate, Ethandiol-1,4-butandiolpolyadipate, 1,6-Hexandiolneopentylglykolpolyadipate, 1,6-Hexandiol-1,4-butandiolpolyadipate und Polycaprolactone. Die Polyester-Diole besitzen im Falle von TPU zahlenmittlere Molekulargewichte n von 500 bis 10000 g/mol, besonders bevorzugt 600 bis 6000 g/mol und können einzeln oder in Form von Mischungen untereinander zur Anwendung kommen.

Die Polyester-Diole besitzen im Falle von CPU zahlenmittlere Molekulargewichte n von 500 bis 4000 g/mol, besonders bevorzugt 800 bis 3000 g/mol und können einzeln oder in Form von Mischungen untereinander zur Anwendung kommen.

In einer Ausführungsform der Erfindung wird das Verhältnis von Komponente I zu Komponente II so gewählt, dass ein leichter Überschuss an NCO Gruppen bei der Herstellung der TPU erhalten wird. Das Äquivalenzverhältnis von NCO-Gruppen zur Summe der NCO-reaktiven Gruppen, insbesondere der OH-Gruppen der niedermolekularen Diole/Triole und Polyole beträgt vorzugsweise 0,9:1,0 bis 1,2:1,0, vorzugsweise 0,95:1,0 bis 1,10:1,0.

Als Kettenverlängerungsmittel (III) werden Diole oder Diamine mit einem Molekulargewicht von 60 bis 495 g/mol eingesetzt, vorzugsweise aliphatische Diole mit 2 bis 14 Kohlenstoffatomen eingesetzt, wie z.B. Ethandiol, 1,2-Propandiol, 1,3-Propandiol, 1,4-Butandiol, 2,3-Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bisethylenglykol oder Terephthalsäure-bis-1,4-butandiol, Hydroxyalkylenether des Hydrochinons, z.B. 1,4-Di(-hydroxyethyl)-hydrochinon, ethoxylierte Bisphenole, z.B. 1,4-Di(hydroxyethyl)-bisphenol A, (cyclo)-aliphatische Diamine, wie Isophorondiamin, Ethylendiamin, 1,2-Propylendiamin, 1,3-Propylendiamin, N-Methylpropylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Besonders bevorzugt werden als Kettenverlängerer Ethandiol, 1,4-Butandiol, 1,6-Hexandiol, 1,4-Di(hydroxyethyl)-hydrochinon oder 1,4-Di(hydroxyethyl)-bisphenol A verwendet. Es können auch Gemische der oben genannten Kettenverlängerer eingesetzt werden. Daneben können auch kleinere Mengen an Triolen zugesetzt werden.

Gegenüber Isocyanaten monofunktionelle Verbindungen können im Falle von TPU in Anteilen bis zu 0,0001 bis 2 Gew.-%, bevorzugt von 0,001 bis 1 Gew.-% bezogen auf thermoplastisches Polyurethan, als sogenannte Kettenabbrecher oder Entformungshilfen eingesetzt werden. Geeignet sind z.B. Monoamine wie Butyl- und Di-butylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die erfindungsgemäß eingesetzten, thermoplastischen Polyurethane (TPU) und Gießpolyurethane (CPU) können als Hilfs- und Zusatzstoffe von 0,0001 bis 20 Gew.-%, bevorzugt von 0,001 - 10 Gew.-%, besonders bevorzugt von 0,01 bis 3 Gew.-% bezogen auf die Gesamtmenge an TPU bzw. CPU, der üblichen Hilfs- und Zusatzstoffe enthalten. Typische Hilfs- und Zusatzstoffe sind Katalysatoren, Pigmente, Farbstoffe, Flammschutzmittel, Stabilisatoren gegen Alterungs- und Witterungseinflüsse, Weichmacher, Gleit- und Entformungsmittel, fungistatisch und bakteriostatisch wirkende Substanzen sowie Füllstoffe und deren Mischungen.

Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den TPU bzw. CPU beträgt in der Regel etwa 0 bis 5 Gew.-%, bevorzugt 0 bis 2 Gew.-%, bezogen auf die Gesamtmenge an TPU bzw. CPU.

Beispiele für weitere Zusatzstoffe sind Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H.Müller (Hanser Verlag München 1990) oder der DE-A 29 01 774 zu entnehmen.

In einer Ausführungsform der Erfindung sind keine Verstärkungsmittel in den Elastomer-Sandwiches oder den Metallverbundelementen enthalten.

Weitere Zusätze, die in das TPU bzw. CPU eingearbeitet werden können, sind Thermoplaste, beispielsweise Polycarbonate und Acrylnitril/Butadien/Styrol-Terpolymere, insbesondere ABS. Auch andere Elastomere wie Kautschuk, Ethylen/Vinylacetatcopolymere, Styrol/Butadiencopolymere sowie andere TPU bzw. CPU Typen können verwendet werden.

Weiterhin zur Einarbeitung geeignet sind handelsübliche Weichmacher wie Phosphate, Phthalate, Adipate, Sebacate und Alkylsulfonsäureester.

In einer Ausführungsform der Erfindung enthält wenigstens entweder TPU oder CPU, besonders bevorzugt weder TPU noch CPU irgendwelche Zusätze.

Die TPU Schicht zur Herstellung der Elastomer-Sandwichsysteme wird in Form von Formkörpern mit flächigen Anteilen wie z. B. Platten, üblicherweise mit einer Dicke von 1,5 bis 25 mm, bevorzugt 2 bis 15 mmm, besonders bevorzugt 2 bis 10 mm oder von 2 bis 20 mm, bevorzugt 2,5 bis 12 mmm, besonders bevorzugt 3 bis 10 mm verwendet.

Die TPU Schicht kann kontinuierlich oder diskontinuierlich hergestellt werden. Die bekanntesten Herstellverfahren sind das Bandverfahren gemäß GB-A 1 057 018 und das Extruderverfahren gemäß DE-A 19 64 834.

Die thermoplastischen Polyurethane der TPU Schicht können ohne Zusatz von Lösungsmitteln diskontinuierlich oder kontinuierlich hergestellt werden. Kontinuierlich können die erfindungsgemäßen TPU beispielsweise mit dem Mischkopf/Bandverfahren oder dem sogenannten Extruderverfahren hergestellt werden. Im Extruderverfahren, z.B. in einem Mehrwellenextruder, kann die Dosierung der Komponenten I), II) und III) gleichzeitig, d.h. im one-shot-Verfahren, oder nacheinander, d.h. nach einem Prepolymer-Verfahren, erfolgen. Dabei kann das Prepolymer sowohl batchweise vorgelegt als auch kontinuierlich in einem Teil des Extruders oder in einem separaten, vorgeschalteten Prepolymeraggregat hergestellt werden.

Die Erfindung ist dadurch gekennzeichnet, dass die Elastomer-Sandwichsysteme eine TPU Schicht, bevorzugt eine Deckschicht, enthalten mit einer Härte von 75 Shore A bis 95 Shore A, bevorzugt, 80 Shore A bis 90 Shore A, besonders bevorzugt von 82 Shore A bis 87 Shore A, welche ein Reaktionsprodukt ist aus einem aliphatischen Diisocyanat (I), mindestens einem zerewitinoff-aktiven Polyol mit im Mittel mindestens 1,8 bis höchstens 2,3 zerewitinoff-aktiven Wasserstoffatomen und mit einem zahlenmittleren Molekulargewicht von 500 bis 5000 g/mol (II) und mindestens einem zerewitinoff-aktiven Polyol mit im Mittel mindestens 1,8 bis höchstens 2,3 zerewitinoff-aktiven Wasserstoffatomen und mit einem zahlenmittleren Molekulargewicht von 60 bis 495 g/mol als Kettenverlängerer (III), wobei das Molverhältnis der den NCO-Gruppen des aliphatischen Diisocyanats zu den OH-Gruppen des Kettenverlängerers (III) und des Polyols (II) 0,9 bis 1,2, bevorzugt 0,95 bis 1,1 beträgt.

Weiterhin weisen die TPUs eine Zugfestigkeit nach DIN 53504 von 25 MPa bis 100 MPa, bevorzugt von 35 MPa bis 80MPa, besonders bevorzugt von 40 MPa bis 70MPa auf.

Außerdem haben die TPUs eine Reißdehnung nach DIN 53512 von 350 % bis 800 %, bevorzugt von 400 % bis 700%, besonders bevorzugt von 500% bis 650%.

Die thermoplastischen Polyurethane zeigen des Weiteren eine Rückprallelastizität nach DIN 53512 von 35 % - 70 %, bevorzugt von 40% bis 70%, besonders bevorzugt von 50 bis 65%.

Die Herstellung der massiven Gießpolyurethan Schicht (CPU) erfolgt nach den bekannten Verfahren wie beschrieben in EP-A1 2 531 538.

Möglichkeiten zur Verbesserung der Haftung zwischen der TPU Schicht und der CPU Schicht bestehen im bekannten Verfahren wie dem Sandstrahlen und/oder der Entfettung der TPU Schicht mit organischen Lösungsmitteln wie z. B. Alkoholen vor Applikation des Gießpolyurethans.

Die Herstellung der Elastomer-Sandwichsysteme erfolgt erfindungsgemäß durch Herstellung der massiven Gießpolyurethane in Gegenwart der TPU Schicht. Massive Gießpolyurethane und Verfahren zu ihrer Herstellung sind allgemein bekannt.

Sie besitzen eine Dichte von 800 bis 1800 kg/m$^3$, bevorzugt von 1000 bis 1500 kg/m$^3$, besonders bevorzugt von 1100 bis 1300 kg/m$^3$.

Weiterhin besitzen die Gießpolyurethane eine Zugfestigkeit nach DIN 53504 von 25 MPa bis 60 MPa, bevorzugt von 35 MPa bis 55MPa, besonders bevorzugt von 40 MPa bis 50MPa.

Außerdem weisen die Gießpolyurethane eine Reißdehnung nach DIN 53504 von 300 % bis 800 % auf, bevorzugt von 400 % bis 700%, besonders bevorzugt von 500% bis 650%.

Die Gießpolyurethane haben des Weiteren eine Rückprallelastizität nach DIN 53512 von 35 % - 70 %, bevorzugt von 40% bis 70%, besonders bevorzugt von 50 bis 65%.

Die Herstellung der massiven Gießpolyurethane kann durch die allgemein bekannte Umsetzung von Isocyanaten mit gegenüber Isocyanaten reaktiven Verbindungen in Gegenwart von Katalysatoren und/oder Hilfs- und/oder Zusatzstoffen erfolgen.

Zur Herstellung der massiven Gießpolyurethane werden I und II + III bevorzugt in solchen Mengen zur Umsetzung gebracht, dass das Verhältnis von NCO-reaktiven zu NCO-Gruppen bevorzugt im Bereich von 0,85 bis 1,25, besonders bevorzugt im Bereich von 0,94 bis 0,98 liegt.

Erfindungsgemäß wird das Gießpolyurethan (ii) in einer offenen oder geschlossenen Form in Kontakt mit dem thermoplastischen Polyurethan (i) durch Umsetzung eines Isocyanatgruppen aufweisenden Prepolymers oder modifiziertes Isocyanat mit einer Vernetzerkomponente enthaltend Katalysatoren und ggfs. Hilfsstoffe hergestellt.

Die massiven Gießpolyurethane und damit die erfindungsgemäßen Elastomer-Sandwichsysteme werden vorteilhafterweise nach dem one shot-Verfahren oder dem Prepolymerverfahren beispielsweise mit Hilfe der Hochdruck- oder Niederdruck-Technik in offenen oder geschlossenen, beispielsweise metallischen Formwerkzeugen, hergestellt. Bevorzugt erfolgt die Herstellung der Elastomer-Sandwichsysteme in Formwerkzeugen, in die man das TPU bevorzugt in Form eines Formkörpers platziert. Die Umsetzung der Ausgangskomponenten zur Herstellung des massiven Gießpolyurethan Elastomers erfolgt in direktem Kontakt mit dem TPU Formkörper, der zumindest teilweise flächig ausgebildet sein kann, oder der TPU Schicht, so dass aufgrund der Reaktion der Ausgangskomponenten eine Verbindung zwischen beiden Materialien hergestellt wird.

Weiterhin kann erfindungsgemäß die Behandlung der Oberfläche des thermoplastischen Polyurethans (i) zur Optimierung der Haftung an dem Gießpolyurethan (ii) vor der Herstellung von oder dem Verbinden mit dem Gießpolyurethan (ii) durch Entfettung und/oder Sandstrahlen erfolgen.

Eine Vorbehandlung, insbesondere Reinigung der Oberfläche des TPU Formkörpers oder der TPU Schicht kann zweckmäßigerweise vor der Reaktion erfolgen. Die Innenwände der Formwerkzeuge, insbesondere die, die mit den Ausgangskomponenten zur Herstellung des massiven Gießpolyurethan Elastomers in Kontakt kommen, können bevorzugt mit einem üblichen Trennmittel versehen werden.

Die Ausgangskomponenten werden üblicherweise bei einer Temperatur von 20°C bis 100°C, vorzugsweise 30°C bis 100°C, weiterhin vorzugsweise von 40 bis 85° C gemischt und in das offene oder in das geschlossene Formwerkzeug eingebracht. Die Temperatur der inneren Oberfläche des Formwerkzeuges beträgt zweckmäßigerweise 20 bis 110° C, vorzugsweise 50 bis 100° C.

Bei einem Prepolymerverfahren werden bevorzugt Isocyanatgruppen aufweisende Prepolymere auf Basis von Diphenymethandiisocyanat (MDI) und/oder carbodiimidisierten/uretoniminisierten Diphenymethandiisocyanat und/oder allophanatisierten Diphenymethandiisocyanat bzw. Toluylendiisocyanat (TDI) verwendet. Die Prepolymere mit einen NCO Gehalt zwischen 5 bis 26%, bevorzugt 10 bis 23%, besonders bevorzugt von 12 bis 18% können nach allgemein bekannten Verfahren hergestellt werden, beispielsweise durch die Umsetzung eines Gemisches, das ein mindestens ein Isocyanat und mindestens eine Verbindung enthält, die gegenüber Isocyanaten reaktiv ist, wobei die Umsetzung üblicherweise bei Temperaturen von 35 bis 100° C durchgeführt wird. Soll ein Isocyanatgruppen-aufweisendes Prepolymer hergestellt werden, so wird zur Herstellung ein entsprechender Überschuss an Isocyanatgruppen gegenüber den Isocyanatreaktiven Gruppen verwendet. Die Reaktion ist im Allgemeinen nach 30 bis 500 min beendet.

Im Falles des one-shot Verfahrens kommen die organischen Diisocyanate (I) zum Einsatz, bevorzugt auf Basis von Diphenymethandiisocyanat (MDI) und/oder carbodiimidisierten/uretoniminisierten Diphenymethandiisocyanat und/oder allophanatisierten Diphenymethandiisocyanat zum Einsatz bzw. Toluylendiisocyanat (TDI).

Die Wandstärke der CPU Schicht beträgt in der Regel zwischen 5 und 80 mm, zwischen 15-80 mm, bevorzugt 10-60 mm und besonders bevorzugt zwischen 15-50 mm. Die Shore A Härte der CPU Schicht liegt im Bereich von 50 bis 85 Shore A, bevorzugt zwischen 55 und 75 Shore A und besonders bevorzugt im Bereich von 60 - 70 Shore A.

Weiterhin Gegenstand der Erfindung ist ein Verfahren zur Herstellung eines Metallverbundelements durch a) Herstellung von Gießpolyurethan (ii) in Gegenwart von und im Kontakt mit thermoplastischem Polyurethan (i) und mit Metall oder durch b) Verbinden eines Elastomer-Sandwichsystems mit Metall. Dabei kann das Metallverbundelement z.B. die Struktur TPU Deckschicht - CPU Zwischenschicht - Metallträger aufweisen. Die erfindungsgemäße Herstellung der Metallverbundelemente kann auch z. B. durch Applikation des erfindungsgemäßen Elastomer-Sandwichsystems auf den Metallträger unter Verwendung eines geeigneten Klebstoffsystems hergestellt werden. Diese sind vorzugsweise lösungsmittelhaltige silanhaltige, isocyanat-basierte, carboxylgruppenhaltige oder Organochlorverbindungen enthaltende Klebstoffsysteme. Alternative Herstellverfahren beinhalten die Herstellung der CPU Trägerschicht und die Applikation des daraus resultierenden Elastomer-Sandwichsystems auf dem Metallträger in einen einzigen Verfahrensschritt, wobei vorteilhafterweise auf den Einsatz von handelsüblichen Klebstoffen verzichtet werden kann.

Ebenfalls Gegenstand der Erfindung ist die Verwendung von Elastomer-Sandwichsystemen in Verkleidungselemente im Transportbereich, im Bergbau- und Minenbereich, so z.B. zum Schutz von Ladeflächen, insbesondere LKW Ladeflächen, oder als Bestandteil von Metallverbundelementen sowie die Verwendung von Metallverbundelementen als Verkleidungselemente im Transportbereich, im Bergbau- und Minenbereich, z.B. zum Schutz von Ladeflächen, insbesondere von LKW Ladeflächen.

Außerdem erfindungsgemäß sind Metallverbundelemente enthaltend erfindungsgemäße Elastomer-Sandwichsysteme.

Die erfindungsgemäßen Elastomer-Sandwichsysteme und Metallverbundelemente können im Bergbaubereich als Alternative zum Gummi-Metallverbundelementen in Fülltrichtern oder auf Transportbändern eingesetzt werden und stellen aufgrund der exzellenten Weitereißfestigkeit sowie aufgrund des signifikant geringeren Abriebs und der deutlich höheren Rückprallelastizität der TPU Deckschicht im Vergleich zu Gummi eine langlebige Alternative dar. Die Lebensdauer des Bauteils wird zusätzlich durch die hohe Rückprallelastizität der CPU Trägerschicht weiter verbessert.

Die vorliegende Erfindung betrifft des Weiteren die Verwendung von erfindungsgemäßen Metallverbundelementen als Verkleidungselemente im Transportbereich, im Bergbau und Minenbereich oder als Schutz für Ladeflächen.

Die vorliegende Erfindung betrifft auch Trichterelemente oder Fülltrichter enthaltend erfindungsgemäße Metallverbundelemente.

Die vorliegende Erfindung betrifft auch Transportbänder enthaltend erfindungsgemäße Metallverbundelemente.

Die Erfindung wird anhand folgender Beispiele näher erläutert ohne sie auf diese zu beschränken.

## Beispiele

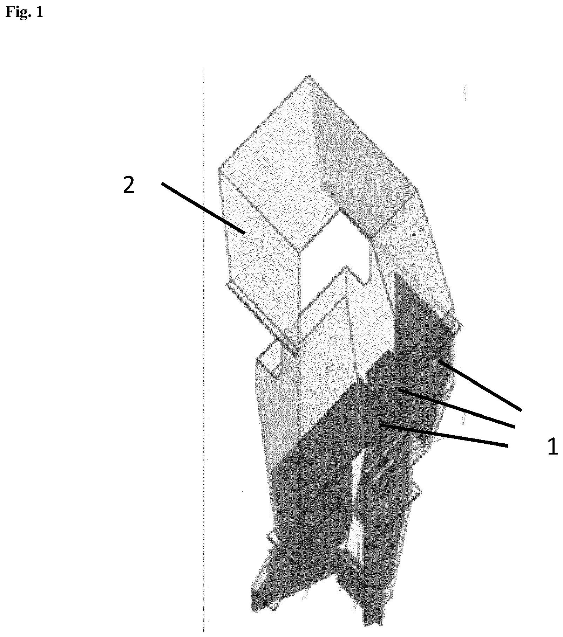

Figur 1: zeigt einen typischen Fülltrichter im Bergbau und Minenbereich. Die dunkel eingezeichneten Elemente (1) sind Metallverbundelemente enthaltend Elastomer-Sandwichsysteme. Die hellen Elemente (2) bestehen aus Metall.

Figur 1 illustriert den Einsatz der erfindungsgemäßen Metallverbundelemente in einem typischen Fülltrichter im Bergbau und Minenbereich (Fa. Siom, Chile). Dabei stellen die hellen Elemente (2) die aus Metall bestehenden Einfüllelemente dar, während die dunklen Elemente (1), die das zu schüttende Gut lenkenden Metallverbundelemente darstellt. Diese können vorteilhafterweise in den Fallweg des zu schüttenden Guts ragen um dessen Impuls zu senken. Die erfindungsgemäß hergestellten Metallverbundelemente werden mechanisch als Schutzschicht auf die Metallinnenwand des Fülltrichters angebracht. Je nach Belastung, verursacht durch den Aufprall von Steinen, wird die Wandstärke der TPU Schicht und der CPU Schicht entsprechend angepasst.

Bei Aufprall von Gesteinsbrocken bis zu einer Tonne Gewicht zeigen die Metallverbundelemente eine gute Schutzfunktion für das darunterliegende Metall und eine gute Widerstandfähigkeit gegen Abrieb und Weiterriss.

## 1. Herstellung der TPU Schicht

Die in der Tabelle 1 dargestellte Rezeptur wurde in einem Reaktionsextruder zu thermoplastischen Polyurethanen umgesetzt. Aus diesem TPU wurden anschließend Prüfkörper zur Bestimmung der mechanischen Eigenschaften gefertigt. Die Eigenschaften der TPU bzw. der Prüfstäbe sind in der Tabelle 3 angegeben. Als Referenz wurde von der Fa. Siom, Chile, ein Gummi Muster zur Verfügung gestellt, das derzeit als Benchmark im Bergbau/Minenbereich für Fülltrichter und Transportbänder eingesetzt wird

**Tabelle 1 mit Angabe der Rohstoffe und Zusammensetzung**

| Rohstoff | Anteil [Gew.-%] |
|---|---|
| 1,4-Butandioladipat (OH-Zahl 50 mg KOH/g) | 65,70 |
| 1,4-Butandiol | 6,93 |
| 4,4'-Diphenylmethandiisocyanat | 26,64 |
| Tyzor® AA105[1] | 0,001 |
| Loxiol® 3324[2] | 0,40 |
| Stabaxol® I[3] | 0,26 |
| Irganox® 1010[4] | 0,07 |
| [1]Titankatalysator von Dorf Ketal Chemicals India Pvt. Ltd., Mumbai [2] Wachs von Emery Oleochemicals GmbH, Düsseldorf [3] Hydrolysestabilisator von Rhein Chemie GmbH, Mannheim [4] Oxidationsstabilisator von BASF SE, Ludwigshafen | |

## 2. Herstellung der CPU Schicht

Die in der Tabelle 2 dargestellte Rezeptur wurde in einer offenen Form zur Herstellung des Gießpolyurethans umgesetzt. Aus diesem CPU wurden anschließend Prüfkörper zur Bestimmung der mechanischen Eigenschaften gefertigt. Die Eigenschaften der CPU bzw. der Prüfstäbe sind in der Tabelle 3 angegeben.

**Tabelle 2 mit Angabe der Rohstoffe und Zusammensetzung**

| Rohstoff | Anteil [Gew. Teile] |
|---|---|
| Desmodur® MDQ 24163[1] | 100 |
| Baytec® D24[2] | 200 |
| 1,4 Butandiol[3] | 8,6 |
| Catalyst SD 2.4[4] | 0,35 |
| [1]MDI Prepolymer der Fa. Covestro Elastomers SAS mit einem NCO Gehalt von 16,4 Gew.-% [2] Polyadipatpolyol der Fa. Covestro Elastomers SAS mit einer Hydroxylzahl von 56 mg KOH/g [3] Kettenverlängerer der Fa. BASF [4] Katalysator der Fa. Covestro Elastomers SAS | |

**Tabelle 3 mit mechanische Eigenschaften TPU - CPU - Kautschuk**

| Eigenschaft | Einheit | TPU gemäß Tabelle 1 | CPU gemäß Tabelle 2 | Kautschuk, RABERMIX Santiago de Chile SIOM 73 | Trelleborg hochabriebfeste Kautschukplatte RF 20 |
|---|---|---|---|---|---|
| Härte[1] | Shore A | 87 | 65 | 78 | 65 |
| 100% Modul[2] | MPa | 6,3 | 2,9 | 3,2 | n.a. |
| 300% Modul[3] | MPa | 14,6 | 5,8 | 11,3 | n.a. |
| Zugfestigkeit[4] | MPa | 57 | 43 | 14 | 24,5 |
| Weiterreißfestigkeit[5] | kN/m | 70 | 24 | 68 | n.a. |
| Reißdehnung[6] | % | 594 | 530 | 365 | 400 |
| Rückprallelastizitaet[7] | % | 51 | 59 | 28 | n.a. |
| Abriebverlust[8] | mm$^3$ | 16 | 40 | 61 | 100 |
| [1]Härte nach DIN 53505<br>[2]100% Modul nach DIN 53504<br>[3]300% Modul nach DIN 53504<br>[4]Zugfestigkeit nach DIN 53504<br>[5]Weiterreißwiderstand nach ISO 34-1<br>[6]Reißdehnung nach DIN 53504<br>[7]Rückprallelastizität nach DIN 53512<br>[8]Abriebverlust nach ISO 4649 | | | | | |

Tabelle 3 zeigt die vorteilhaften Eigenschaften der TPU Deckschicht und der CPU Trägerschicht im Vergleich zu bekannten Kautschuksystemen. Die TPU Schicht der erfindungsgemäßen Elastomer-Sandwichsysteme weist eine deutlich verbesserte Rückprallelastizität und einen signifikant geringeren Abrieb im Vergleich zum als Benchmark eingesetzten Kautschuk der Fa. Siom bei ähnlicher Weiterreißfestigkeit auf. Gegenüber einem abriebstabilen Kautschuk der Fa. Trelleborg ist die verbesserte Zugfestigkeit und Reißdehnung und insbesondere auch eine verbesserte Abriebbeständigkeit gegeben.

Das CPU zeigt im Vergleich zum Kautschuk der Fa. Siom und dem abriebstabilen Kautschuk der Fa. Trelleborg eine verbesserte Zugfestigkeit, Reißdehnung und Abriebbeständigkeit bei sehr guter Rückprallelastizität.

Der Abriebverlust nach ISO 4649 (gültig für CPU und TPU) wurde folgendermaßen berechnet:

$$\text{Abrieb in mm}^3 = (X-Y)/Z*K,$$

wobei

X: die Masse des Prüfkörpers vor der Messung,
Y: die Masse des Prüfkörpers nach der Messung,
Z: die Dichte des Bauteils und
K: der Korrekturfaktor ist.

**3. Herstellung der Elastomer-Sandwichsysteme**

Die Herstellung der Elastomer-Sandwichelemente erfolgte derart, dass die gereinigte TPU Schicht in eine Form gelegt wurde und anschließend die erforderlichen Rohstoffe (I, II und III) nach Hand oder Maschinenvermischung in die Form gegossen wurden. Das massive Gießpolyurethan CPU entstand in direktem Kontakt mit dem TPU. Die Formtemperatur betrug 80° C.

Als Reaktionsmischung zur Herstellung des massiven Gießpolyurethans wurde ein System analog Tabelle 3 eingesetzt.

Die hergestellten Elastomer-Sandwichsysteme weisen Dichten von 1200 g/cm$^3$ auf.

Die Herstellung der entsprechenden Metallverbundelemente erfolgte durch Aufbringen des Elastomer-Sandwichsystems auf einem Metall Träger unter Verwendung eines Klebstoffsystems.

**Patentansprüche**

1. Elastomer-Sandwichsysteme. enthaltend mindestens zwei Komponenten, wobei eine Komponente

   (i) ein thermoplastisches Polyurethan ist, das als Deckschicht fungiert, und daran flächig haftend die zweite Komponente
   (ii) ein massives Gießpolyurethan mit einer Dichte von 800 bis 1800 kg/m$^3$ ist, das als Trägerschicht fungiert,

   **dadurch gekennzeichnet, dass** die mindestens eine Deckschicht-Komponente des Elastomer-Sandwichsystems einen Weiterreißwiderstand nach ISO 34-1 von 30 kN/m bis 85 kN/m und einen Abriebverlust nach ISO 4649 von 50 mm$^3$ bis 5 mm$^3$ aufweist und zusätzlich mindestens beide Komponenten eine Rückprallelastizität nach DIN 53512 von 35 % - 70 % aufweisen.

2. Elastomer-Sandwichsystem gemäß Anspruch 1, **dadurch gekennzeichnet, dass** es sich um einen Schichtverbund handelt, bei dem mindestens eine thermoplastische Polyurethanschicht mit mindestens einer massiven Gießpolyurethanschicht verbunden ist.

3. Elastomer-Sandwichsystem gemäß Anspruch 1 oder 2, **dadurch gekennzeichnet, dass** es sich um einen thermoplastisches Polyurethan (i) - massives Gießpolyurethan (ii) Schichtverbund oder einen thermoplastisches Polyurethan (i) - massives Gießpolyurethan (ii) - thermoplastisches Polyurethan (i) Schichtverbund, bevorzugt thermoplastisches Polyurethan (i) - massives Gießpolyurethan (ii) Schichtverbund handelt.

4. Elastomer-Sandwichsystem gemäß Ansprüchen 1 bis 3, **dadurch gekennzeichnet, dass** die Wandstärke der massiven Gießpolyurethanschicht zwischen 5 und 80 mm beträgt.

5. Verfahren zur Herstellung von Elastomer-Sandwich gemäß Ansprüchen 1 bis 4 durch

   a) Herstellung von thermoplastischem Polyurethan (i) und
   b) nachfolgend Anfügen von massivem Gießpolyurethan (ii).

6. Verfahren gemäß Anspruch 5 durch Herstellung von massivem Gießpolyurethan (ii) in Gegenwart von thermoplastischem Polyurethan (i).

7. Verfahren gemäß Anspruch 5 durch Verbinden von thermoplastischem Polyurethan (i) mit vorgefertigtem massivem Gießpolyurethan (ii).

8. Verfahren nach Anspruch 5 oder 6, **dadurch gekennzeichnet, dass** das massive Gießpolyurethan (ii) in einer offenen oder geschlossenen Form in Kontakt mit thermoplastischem Polyurethan (i) durch Umsetzung eines Isocyanatgruppen aufweisenden Prepolymers oder modifiziertes Isocyanat mit einer Vernetzerkomponente enthaltend Katalysatoren und ggfs. Hilfsstoffe hergestellt wird.

9. Verfahren nach einem der Ansprüche 6 bis 8, **dadurch gekennzeichnet, dass** die Oberfläche von thermoplastischem Polyurethan (i) zur Optimierung der Haftung an massivem Gießpolyurethan (ii) vor der Herstellung von oder dem Verbinden mit massivem Gießpolyurethan (ii) durch Entfettung und/oder Sandstrahlen gereinigt wird.

10. Verfahren zur Herstellung eines Metallverbundelements durch a) Herstellung von massivem Gießpolyurethan (ii) in Gegenwart von und im Kontakt mit thermoplastischem Polyurethan (i) und mit Metall oder durch b) Verbinden eines Elastomer-Sandwichsystems gemäß Ansprüchen 1 bis 4 mit Metall.

11. Verwendung von Elastomer-Sandwichsystemen gemäß Ansprüchen 1 bis 4 als Verkleidungselemente im Transportbereich, Bergbau- und Minenbereich oder als Schutz für Ladeflächen.

12. Metallverbundelemente enthaltend Elastomer-Sandwichsystemen gemäß Ansprüchen 1 bis 4.

13. Verwendung von Metallverbundelementen gemäß Anspruch 12 als Verkleidungselemente im Transportbereich, im Bergbau und Minenbereich oder als Schutz für Ladeflächen.

**14.** Trichterelemente oder Fülltrichter enthaltend Metallverbundelemente gemäß Anspruch 12 .

**15.** Transportbänder enthaltend Metallverbundelemente gemäß Anspruch 12 .

**Claims**

**1.** Elastomer sandwich systems containing at least two components, wherein one component is

(i) a thermoplastic polyurethane which functions as a covering layer and, adhering thereto over its area, the second component is
(ii) a noncellular cast polyurethane having a density of from 800 to 1800 kg/m$^3$ which functions as a support layer,

**characterized in that** the least one covering layer component of the elastomer sandwich system has a tear propagation resistance in accordance with ISO 34-1 of from 30 kN/m to 85 kN/m and an abrasion loss in accordance with ISO 4649 of from 50 mm$^3$ to 5 mm$^3$ and in addition at least the two components have a rebound resilience in accordance with DIN 53512 of 35% - 70%.

**2.** Elastomer sandwich system according to Claim 1, **characterized in that** it is a layer composite in which at least one thermoplastic polyurethane layer is joined to at least one noncellular cast polyurethane layer.

**3.** Elastomer sandwich system according to Claim 1 or 2, **characterized in that** it is a thermoplastic polyurethane (i) - noncellular cast polyurethane (ii) layer composite or a thermoplastic polyurethane

(i) - noncellular cast polyurethane
(ii) - thermoplastic polyurethane (i) layer composite, preferably a thermoplastic polyurethane (i) - noncellular cast polyurethane (ii) layer composite.

**4.** Elastomer sandwich system according to Claims 1 to 3, **characterized in that** the wall thickness of the noncellular cast polyurethane is between 5 and 80 mm.

**5.** Process for producing an elastomer sandwich according to any of Claims 1 to 4 by

a) production of thermoplastic polyurethane (i) and
b) subsequent attachment of noncellular cast polyurethane (ii).

**6.** Process according to Claim 5 by producing noncellular cast polyurethane (ii) in the presence of thermoplastic polyurethane (i).

**7.** Process according to Claim 5 by joining thermoplastic polyurethane (i) to prefabricated noncellular cast polyurethane (ii).

**8.** Process according to Claim 5 or 6, **characterized in that** the noncellular cast polyurethane (ii) is produced in an open or closed mould in contact with thermoplastic polyurethane (i) by reacting a prepolymer having isocyanate groups or a modified isocyanate with a crosslinker component containing catalysts and optionally auxiliaries.

**9.** Process according to any of Claims 6 to 8, **characterized in that** the surface of the thermoplastic polyurethane (i) is cleaned by degreasing and/or sandblasting before the production of or joining to the noncellular cast polyurethane (ii) in order to optimize the adhesion to the noncellular cast polyurethane (ii).

**10.** Process for producing a metal composite element by

a) producing noncellular cast polyurethane (ii) in the presence of and in contact with thermoplastic polyurethane (i) and with metal or by b) joining an elastomer sandwich system according to Claims 1 to 4 to metal.

**11.** Use of elastomer sandwich systems according to Claims 1 to 4 as lining elements in the transport sector, mining and mine sector or as protection for loading surfaces.

**12.** Metal composite elements containing elastomer sandwich systems according to Claims 1 to 4.

**13.** Use of metal composite elements according to Claim 12 as lining elements in the transport sector, in the mining and mine sector or as protection for loading surfaces.

**14.** Funnel elements or hoppers containing metal composite elements according to Claim 12.

**15.** Conveyor belts containing metal composite elements according to Claim 12.

**Revendications**

**1.** Systèmes sandwich élastomères contenant au moins deux composants, un composant étant :

(i) un polyuréthane thermoplastique qui joue le rôle de couche de couverture, et, collée en pleine surface pardessus, le second composant étant
(ii) un polyuréthane de coulée massif ayant une masse volumique de 800 à 1 800 kg/m$^3$, qui joue le rôle de couche support,

**caractérisés en ce que** l'au moins un composant couche de couverture du système sandwich élastomère présente une résistance au déchirement selon ISO 34-1 de 30 kN/m à 85 kN/m et une perte par abrasion selon ISO 4649 de 50 mm$^3$ à 5 mm$^3$, et ce qu'en outre au moins les deux composants présentent une résilience de rebondissement selon DIN 53512 de 35 % à 70 %.

**2.** Système sandwich élastomère selon la revendication 1, **caractérisé en ce qu'**il s'agit d'un composite stratifié, dans lequel au moins une couche de polyuréthane thermoplastique est liée à au moins une couche de polyuréthane de coulée massif.

**3.** Système sandwich élastomère selon la revendication 1 ou 2, **caractérisé en ce qu'**il s'agit d'un composite stratifié polyuréthane thermoplastique (i) - polyuréthane de coulée massif (ii) ou d'un composite stratifié polyuréthane thermoplastique (i) - polyuréthane de coulée massif (ii) - polyuréthane thermoplastique (i), de préférence d'un composite stratifié polyuréthane thermoplastique (i) - polyuréthane de coulée massif (ii).

**4.** Système sandwich élastomère selon les revendications 1 à 3, **caractérisé en ce que** l'épaisseur de paroi de la couche de polyuréthane de coulée massif est comprise entre 5 et 80 mm.

**5.** Procédé de fabrication du sandwich élastomère selon les revendications 1 à 4 par

a) fabrication du polyuréthane thermoplastique (i) et
b) puis ajout du polyuréthane de coulée massif (ii).

**6.** Procédé selon la revendication 5 par fabrication du polyuréthane de coulée massif (ii) en présence du polyuréthane thermoplastique (i).

**7.** Procédé selon la revendication 5 par liaison du polyuréthane thermoplastique (i) au polyuréthane de coulée massif (ii) préfabriqué.

**8.** Procédé selon la revendication 5 ou 6, **caractérisé en ce que** le polyuréthane de coulée massif (ii) est fabriqué dans un moule ouvert ou fermé en contact avec le polyuréthane thermoplastique (i) par réaction d'un polymère comportant des groupes isocyanate ou d'un isocyanate modifié avec un composant de réticulation contenant des catalyseurs et éventuellement des adjuvants.

**9.** Procédé selon l'une des revendications 6 à 8, **caractérisé en ce que** la surface du polyuréthane thermoplastique (i) est, pour optimiser l'adhérence au polyuréthane de coulée massif (ii), nettoyée avant la fabrication du polyuréthane de coulée massif (ii) ou avant la liaison de celui-ci, par dégraissage et/ou sablage.

10. Procédé de fabrication d'un élément composite en métal par a) fabrication du polyuréthane de coulée massif (ii) en présence du polyuréthane thermoplastique (i) et en contact avec celui-ci et avec un métal ou par b) liaison à un métal d'un système sandwich élastomère selon les revendications 1 à 4.

11. Utilisation de systèmes sandwich élastomères selon les revendications 1 à 4 comme éléments de revêtement dans le domaine du transport, dans le domaine de l'exploitation minière et des mines, et comme protection pour surfaces de chargement.

12. Éléments composites en métal contenant des systèmes sandwich élastomères selon les revendications 1 à 4.

13. Utilisation d'éléments composites en métal selon la revendication 12 comme éléments de revêtement dans le domaine du transport, dans le domaine de l'exploitation minière et des mines, ou comme protection pour surfaces de chargement.

14. Éléments de trémie ou trémies de remplissage contenant des éléments composites métalliques selon la revendication 12.

15. Bandes transporteuses contenant des éléments composites en métal selon la revendication 12.

**Fig. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9126762 B1
- EP 1013416 A2
- EP 0280175 A2
- DE 2901774 A
- GB 1057018 A
- DE 1964834 A
- EP 2531538 A1

**In der Beschreibung aufgeführte Nicht-Patentliteratur**

- Methoden der organischen Chemie. **HOUBEN-WEYL.** Makromolekulare Stoffe. Georg Thieme Verlag, 1987, vol. E20, 1587-1593
- **JUSTUS LIEBIGS.** *Annalen der Chemie,* vol. 562, 75-136
- High Polymers. **J.H. SAUNDERS ; K.C. FRISCH.** Polyurethane. Verlag Interscience Publishers, 1962, vol. XVI
- **R. GÄCHTER ; H.MÜLLER.** Taschenbuch für Kunststoff-Additive. Hanser Verlag, 1990